# FASCICULE DE BREVET EUROPEEN

(11) **EP 1 046 029 B1**
(45) Date de publication et mention de la délivrance du brevet: **09.01.2008**
(21) Numéro de dépôt: 99971916.4
(22) Date de dépôt: 09.11.1999
(51) Int. Cl.: G01N 21/85, G01N 21/15

(54) **CELLULE DE MESURE D'ACTIVITE D'UN LIQUIDE, POURVUE D'UN MOYEN DE RINCAGE DE SONDE**
ZELLE ZUM MESSEN DER AKTIVITÄT EINER FLÜSSIGKEIT MIT EINER SPÜLVORRICHTUNG FÜR DIE SONDE
CELL FOR MEASURING A LIQUID ACTIVITY, PROVIDED WITH PROBE RINSING MEANS

(30) Priorité: 10.11.1998 FR 9814142
(43) Date de publication de la demande: 25.10.2000
(73) Titulaire: COMPAGNIE GENERALE DES MATIERES NUCLEAIRES, 78140 Velizy Villacoublay (FR)
(72) Inventeur: DRAIN, François, F-78860 Saint-Nom-La-Breteche (FR); TREVISAN, Christian, F-78400 Chatou (FR)
(74) Mandataire: Ilgart, Jean-Christophe
(86) Numéro de dépôt international: PCT/FR1999/002742
(87) Numéro de publication internationale: WO 2000/028308

(56) Documents cités:
- DE-A- 3 446 908
- US-A- 4 874 243
- US-A- 4 946 652

## Description

L'invention concerne une cellule de mesure d'activité d'un liquide.

Des cellules spectrophotométriques sont couramment utilisées pour mesurer, par exemple, les concentrations d'uranium et de plutonium de liquides radioactifs. Elles comprennent une extrémité appelée optode qu'on immerge dans le liquide chargé en éléments radioactifs, un spectrophotomètre, qu'on installe dans une zone accessible aux opérateurs et qui mesure les concentrations de ces éléments et affiche les résultats, et une fibre optique qui relie le spectrophotomètre à l'optode.

Une optode est en général constituée d'un cylindre de quartz qui est traversé par deux branches parallèles de la fibre optique affectées à l'aller et au retour de la lumière grâce à une réflexion produite au fond de l'optode. Une fente est creusée dans le cylindre de quartz pour interrompre la fibre sur une partie de sa longueur appartenant à la branche de retour ou aux deux branches ; cette longueur est appelée « parcours optique » et sert à recueillir les photons émis par les particules actives du liquide aux fins de mesure. Il est donc indispensable que le parcours optique soit entièrement immergé dans le liquide à mesurer.

Les mesures consistent aujourd'hui à plonger l'optode dans un bécher contenant un échantillon du liquide à analyser, ce qui impose certaines manipulations. D'autres manipulations sont nécessaires avant chaque nouvelle utilisation, car l'optode doit être rincée puis étalonnée. L'utilisation de ces appareils spectrophotométriques est donc lente et fastidieuse et impose de prendre des précautions pour éviter des contaminations.

Le document DE 34 46 908 décrit une cellule d'observation de micro-organismes dans un liquide dont certaines réalisations comprennent un alvéole mince derrière lequel un moyen d'observation est placé et qui peut être rincé par un liquide propre sortant d'une conduite ; et dont d'autres réalisations comprennent une sonde optique plongée dans le liquide. Aucune de ces réalisations ne comporte de sonde tournant entre une position d'observation et une position de rinçage.

La cellule de mesure proposée ici et qui sera décrite en détail plus loin a pour avantages principaux de permettre en sûreté des mesures directes et rapides sur un liquide, sans devoir soutirer un échantillon du liquide du circuit dans lequel il se trouve pour le verser dans un récipient, ni imposer des manipulations compliquées. Surtout, elle se prête à des rinçages et des étalonnages faciles quoiqu'elle ne soit normalement pas accessible.

Les mesures prises concrètement pour assurer ces avantages ont consisté à intégrer l'optode au bout d'une sonde et à faire passer une portion d'un circuit d'écoulement du liquide de mesure par la cellule de manière que l'optode soit plongée dans cette portion du circuit. Il est ajouté un circuit de rinçage qui débouche sur l'optode et permet de la rincer à volonté. L'optode reste engagée dans la cellule mais peut être orientée soit vers le liquide de mesure, soit vers celui de rinçage.

Pour résumer, l'invention concerne sous sa forme la plus générale une cellule de mesure d'activité d'un liquide, comprenant une sonde, et conforme à la première revendication.

L'immersion de l'optode est garantie si on dispose un barrage à trop-plein en aval de l'alvéole à travers le conduit de liquide de rinçage.

On va maintenant aborder une description plus détaillée de l'invention, afin de mieux saisir sa constitution, ses buts et avantages, au moyen de sa réalisation préférée, illustrée sur les figures suivantes :
- la figure 1 illustre la disposition d'ensemble de l'invention,
- la figure 2 illustre la sonde,
- la figure 3 est une vue de l'optode et d'une portion adjacente du circuit d'écoulement du liquide, en coupe longitudinale et verticale du circuit et de la sonde,
- la figure 4 représente la même partie de l'invention en coupe horizontale,
- la figure 5 est identique à la figure 4, sauf que la sonde est en position de rinçage au lieu d'être en position de mesure,
- la figure 6 illustre les mêmes éléments en coupe transversale,
- et les figures 7 et 8 illustrent deux genres de sondes.

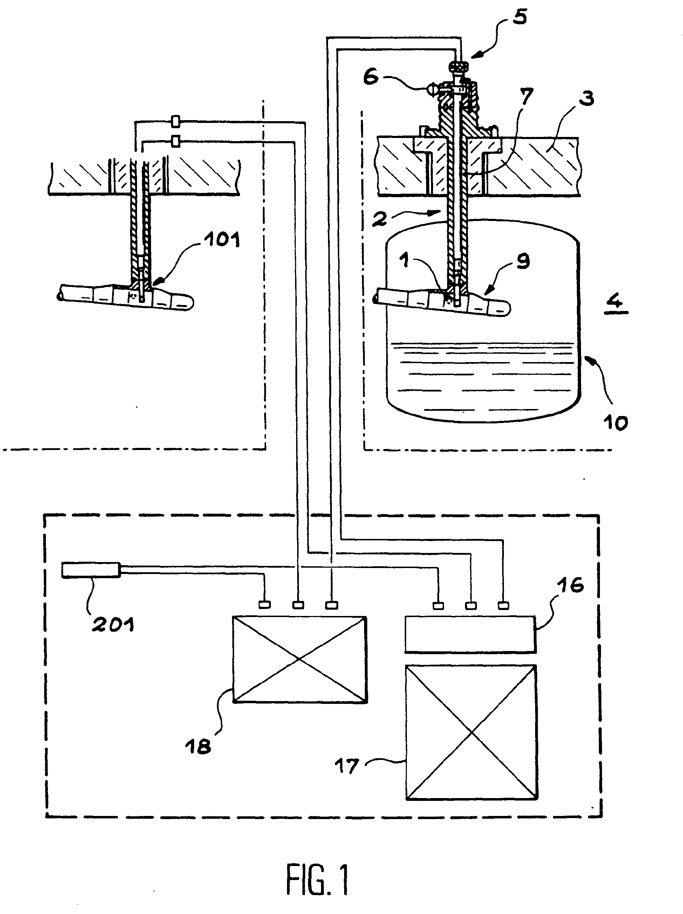

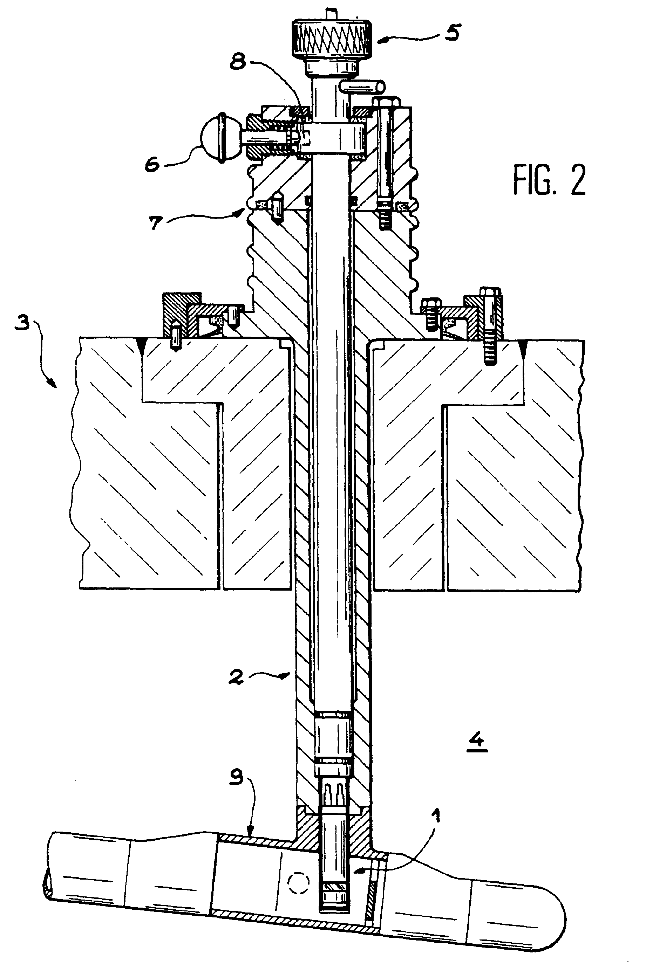

La cellule de mesure de la figure 1 comprend une optode 1 comme élément actif ; elle est placée au bout d'une sonde 2, complètement illustrée à la figure 2, qui traverse une dalle de protection 3 et dont l'extrémité opposée à l'optode 1, située à l'extérieur d'une zone confinée 4, porte une poignée 5 de commande de rotation de la sonde 2 dans un manchon de protection 7 qui traverse la dalle de protection 3 et sert à loger la sonde 2. Un ergot 6 coulisse dans le manchon 7 perpendiculairement à la sonde 2, de façon à pouvoir pénétrer dans des perçages 8 qu'elle comporte et bloquer sa rotation ; ces perçages sont au nombre de deux et diamétralement opposés. Des joints d'étanchéité toriques non référencés, serrés entre la sonde 2 et le manchon 7, retiennent la contamination éventuelle sous la dalle de protection 3, dans la zone confinée 4.

L'optode 1 débouche dans un circuit d'écoulement 9 du liquide dont l'activité doit être mesurée. Il peut s'agir d'une branche de dérivation d'un circuit plus important, dans laquelle on détourne à volonté un débit déterminé du liquide. Le circuit d'écoulement 9 débouche dans un réservoir 10 où se déverse le liquide de mesure, mais il pourrait aussi se poursuivre vers l'aval pour se raccorder à d'autres branches de circuit.

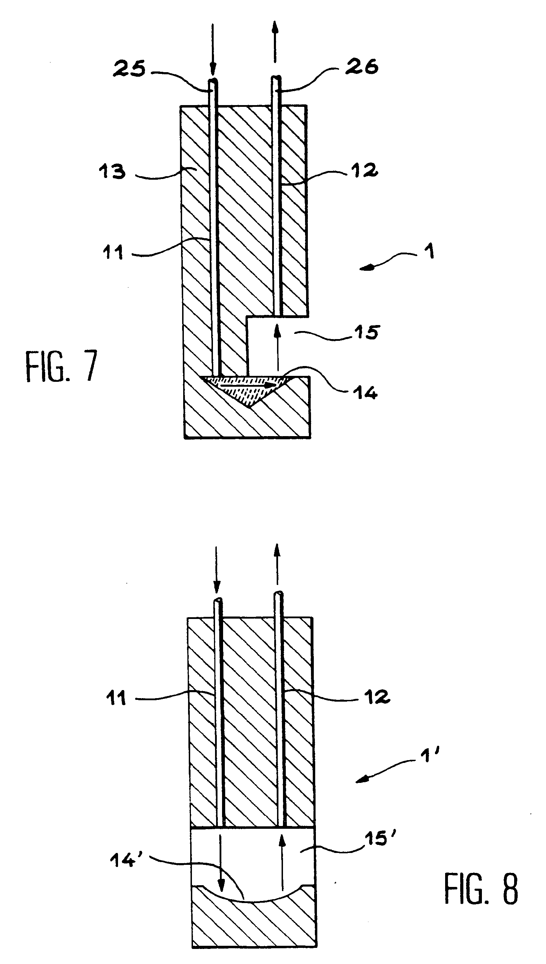

Une possibilité de constitution de l'optode 1 est mieux visible à la figure 7. Deux branches 11 et 12 d'un trajet optique traversent un bloc 13 de quartz noir (donc parfaitement opaque). Une enveloppe d'acier inoxydable non représentée entoure l'optode 1, sauf devant la fente 15 qu'on va bientôt décrire, et la protège. Des fibres optiques 25 et 26 matérialisent les branches 11 et 12 et sont dirigées vers un prisme 14 creusé au fond du bloc 13 et dont les facettes renvoient la lumière d'une branche 11 à l'autre 12. Cependant, la branche 11 s'étend jusque devant le prisme 14, alors que la branche 12 est séparée du prisme 14 par une fente 15 creusée dans le bloc 13 ; le liquide de mesure emplit cette fente 15 et la lumière qu'il émet est captée par la branche 12 et mesurée par un spectromètre 16 représenté à la figure 1, puis la mesure est exploitée par un système électronique 17 non représenté en détail. La branche 11 est une branche d'aller servant à l'étalonnage de l'optode 1 et est raccordée à une source lumineuse 18 qui envoie une intensité de lumière bien définie entre des mesures sur le liquide actif. Cette lumière atteint le spectromètre 16 après être passée par le prisme 14, la fente 15 et la branche 12, qui est une branche de retour. Le spectromètre 16 et la source 18 peuvent être raccordés à plusieurs optodes à la fois, effectuant des mesures différentes, par des commutateurs appropriés ; l'une d'elles est représentée et porte la référence 101 ; une autre optode 201, connectée de la même façon, est inactive et ne sert qu'aux étalonnages.

Une autre optode 1', à vrai dire peu différente de la précédente, peut être utilisée dans les mêmes conditions ; la figure 8 la représente. Sa fente 15' est plus longue que celle de l'optode 1 et s'étend aussi devant la branche d'aller 11'. De plus, le prisme 14 est remplacé par un miroir concave 14' aux propriétés réfléchissantes analogues.

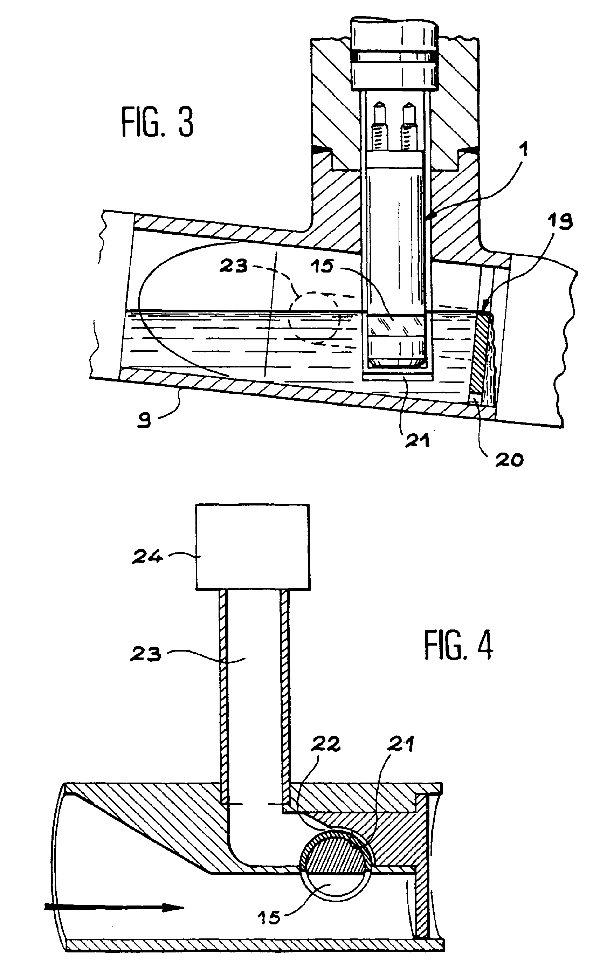

On se reporte à la figure 3. Le circuit d'écoulement 9 est incliné pour garantir un écoulement permanent du liquide, et son ouverture aval est partiellement obstruée par une cloison 19 qui en laisse le haut dégagé et forme donc un barrage à trop-plein. Le liquide emplit le circuit d'écoulement 9 jusqu'à ce qu'il atteigne le sommet de la cloison de trop-plein 19 et déborde pour se déverser dans le réservoir 10. Une lumière 20 est cependant prévue au bas de la cloison de trop-plein 19 : son but est de garantir le renouvellement du liquide et de l'empêcher de stagner devant la cloison de trop-plein 19, ce qui pourrait nuire à la qualité des mesures.

L'optode 1 est plongée dans le circuit d'écoulement 9, sa fente 15 étant à hauteur de la cloison de trop-plein 19, de sorte qu'elle est complètement baignée par le liquide de mesure.

La figure 4 montre que l'optode 1 est en réalité à demi logée dans un alvéole 21 semi-cylindrique établi dans la paroi du conduit d'écoulement 9, de manière à toujours présenter une face exposée à l'écoulement de liquide et une face opposée à cet écoulement et tournée vers la surface de l'alvéole 21, dont elle est séparée par un jeu 22. De plus, un conduit de rinçage 23 débouche dans l'alvéole 21. Ce conduit de rinçage est ascendant à partir de l'alvéole 21 et débouche sur des moyens d'alimentation en liquide de rinçage 24 non représentés en détail et qui peuvent comprendre un réservoir dudit liquide, fermé par une vanne et situé sur la dalle de protection 23, dans la zone accessible aux opérateurs.

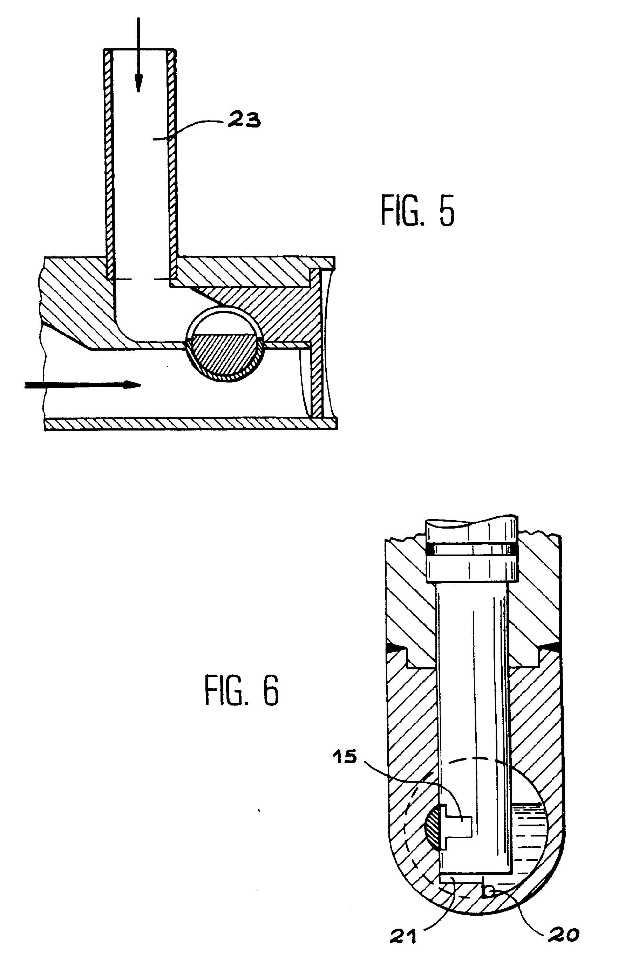

La cellule de mesure peut prendre tour à tour un état de mesure et un état de rinçage et d'étalonnage. Dans celui-là, l'optode 1 est placée comme représenté sur les figures 3 et 4, la fente 15 étant tournée vers le circuit d'écoulement 9, et le liquide de mesure baigne l'optode 1 jusqu'à hauteur du bord supérieur de la cloison de trop-plein 19, y compris à l'endroit du jeu 22 et dans la partie correspondante du conduit de rinçage 23. Le liquide occupe donc la fente 15 et les mesures sont accomplies de manière habituelle. Dans l'état de rinçage, l'optode 1 est tournée pour placer la fente 15 face à la paroi de l'alvéole 21, comme représenté sur les figures 5 et 6, et du liquide de rinçage est versé dans le circuit de rinçage 23, où il coule par gravité, en suivant la pente de ce circuit, avant de contourner l'optode 1 et de passer dans le circuit d'écoulement 9 à travers le jeu 22. Le liquide de mesure est chassé des abords de l'optode 1 grâce à une pente du circuit de rinçage 23 plus forte que celle du circuit d'écoulement 9. Le liquide de rinçage a donc une charge hydraulique plus élevée et traverse la fente 15 au cours de cet écoulement en la lavant des impuretés qui avaient pu s'y incruster. On voit que l'opération de rinçage est facilement menée puisqu'il suffit de tourner l'optode 1 et de faire couler assez de liquide de rinçage pour chasser le liquide de mesure infiltré dans le conduit de rinçage 23 avant de procéder au rinçage lui-même. Elle ne nécessite qu'une interruption brève des mesures, qui peuvent être reprises ensuite en replaçant la fente 15 dans le circuit d'écoulement 9 ; il suffit d'attendre qu'une nouvelle quantité de liquide de mesure ait remplacé le liquide de rinçage. Comme le rinçage est effectué sur place, il n'est pas contraignant et peut être répété dès qu'apparaît un doute sur la qualité des mesures ; la sonde 2 ne sera extraite que dans des circonstances exceptionnelles, en particulier pour la remplacer.

Des étalonnages de la sonde 2 peuvent avantageusement être entrepris à la fin du rinçage, avant de la replacer dans l'état de mesure. On se sert pour cela de la source lumineuse 18, comme on l'a mentionné plus haut.

## Revendications

1. Cellule de mesure d'activité d'un liquide, comprenant une sonde (2) munie d'une extrémité (1) cylindrique de mesure, **caractérisée en ce qu'**elle comprend une conduite d'écoulement du liquide munie d'un alvéole semi-cylindrique dans lequel l'extrémité cylindrique est à demi engagée, l'alvéole (21) étant établi dans une paroi de la conduite d'écoulement s'ouvrant d'un côté dans la conduite (9) et étant délimité d'un autre côté par la paroi, un jeu (22) existant entre l'extrémité (1) de la sonde (2) et la paroi (21), la cellule comprenant aussi un conduit de liquide de rinçage débouchant dans l'alvéole par la paroi, et **en ce que** la sonde est montée à pivotement libre dans la cellule de manière que l'extrémité cylindrique de mesure puisse être orientée soit vers le liquide de mesure soit vers celui de rinçage, en présentant toujours une face exposée au liquide de mesure et une face opposée tournée vers la paroi délimitant l'alvéole.

2. Cellule de mesure selon la revendication 1, **caractérisée en ce que** le conduit de liquide de rinçage (23) est descendant d'une section d'alimentation en liquide de rinçage (24) à l'alvéole (21).

3. Cellule de mesure selon la revendication 2, **caractérisée en ce que** le conduit de liquide de rinçage est descendant avec une pente supérieure à une pente de la conduite d'écoulement(9).

4. Cellule de mesure selon l'une quelconque des revendications 1 à 3, **caractérisée en ce que** la conduite d'écoulement comprend une ouverture limitée par un barrage à trop-plein (19) en aval de l'alvéole.

5. Cellule de mesure selon la revendication 4, **caractérisée en ce que** le barrage à trop-plein comprend un perçage inférieur de déversement (20).

## Claims

1. Cell for measuring the activity of a liquid, comprising a probe (2) fitted with one cylindrical measuring end (1), **characterized in that** it comprises a flow-pipe for the liquid provided with a cylindrical cavity in which the cylindrical end is inserted, said cavity (21) opening on one side into the pipe (9) and being delimited on the other side by a wall, a clearance (22) existing between the end (1) of the probe (2) and wall (21), said cell also comprising a rinsing liquid duct leading into the cavity via the wall, and **in that** the probe is mounted so that it can pivot freely within the cell, so that the cylindrical measuring end can be oriented either towards the measuring liquid or towards the rinsing liquid, whilst still having a face exposed to the measuring liquid and an opposite face turned towards the wall delimiting the cavity.

2. Measuring cell according to claim 1, **characterized in that** the rinsing liquid duct (23) slopes down from a rinsing liquid supply section (24) towards cavity (21).

3. Measuring cell according to claim 2, **characterized in that** the rinsing liquid duct slopes downwards with a slope greater than a slope of the flow-pipe (9).

4. Measuring cell according to any of claims 1 to 3, **characterized in that** the flow-pipe comprises an opening limited by an overflow barrier (19) downstream from the cavity.

5. Measuring cell according to claim 4, **characterized in that** the overflow barrier comprises a lower discharge opening (20).

## Patentansprüche

1. Zelle zum Messen der Aktivität einer Flüssigkeit, umfassend eine Sonde (2), die mit einem zylindrischen Messende (1) ausgestattet ist, **dadurch gekennzeichnet, daß** sie ein Flüssigkeitsablaufrohr umfaßt, das mit einer halbzylindrischen Kammer versehen ist, in die das zylindrische Ende zur Hälfte eingeführt ist, wobei sich die in einer Wand des Ablaufrohrs angebrachte Kammer (21) auf einer Seite zum Rohr (9) öffnet und auf der anderen Seite durch die Wand begrenzt wird, zwischen dem Ende (1) der Sonde (2) und der Wand (21) ein Abstand (22) besteht und die Zelle außerdem eine über die Wand in die Kammer mündende Spülflüssigkeitsleitung umfaßt, und **dadurch, daß** die Sonde so eingebaut ist, daß sie innerhalb der Zelle frei beweglich ist, damit das zylindrische Messende entweder zur Meßflüssigkeit oder der Spülflüssigkeit ausgerichtet werden kann, wobei sie immer eine der Meßflüssigkeit ausgesetzte Seite und eine gegenüberliegende, der die Kammer begrenzenden Wand zugewandte Seite aufweist.

2. Meßzelle gemäß Anspruch 1, **dadurch gekennzeichnet, daß** die Spülflüssigkeitsleitung (23) von einem Bereich (24) der Spülflüssigkeitszufuhr zur Kammer (21) herabführt.

3. Meßzelle gemäß Anspruch 2, **dadurch gekennzeichnet, daß** die Spülflüssigkeitsleitung mit einer größeren Steigung als der Steigung des Ablaufrohrs (9) herabführt.

4. Meßzelle gemäß einem der Ansprüche 1 bis 3, **dadurch gekennzeichnet, daß** das Ablaufrohr eine Öffnung umfaßt, die durch eine Überlaufsperre (19) stromabwärts der Kammer begrenzt wird.

5. Meßzelle gemäß Anspruch 4, **dadurch gekennzeichnet, daß** die Überlaufsperre eine untere Auslaßbohrung (20) aufweist.
